# EUROPEAN PATENT APPLICATION

(11) **EP 4 496 249 A1**
(43) Date of publication of application: **22.01.2025**
(21) Application number: 22931303.6
(22) Date of filing: 14.03.2022
(51) Int. Cl.: H04L 5/00

(54) **METHOD AND APPARATUS FOR DETERMINING ASSOCIATION RELATIONSHIP OF UPLINK PTRS PORTS, MEDIUM, AND PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/080786
(87) International publication number: WO 2023/173263

(57) **Abstract**

The present application relates to the field of communications, and discloses a method and apparatus for determining an association relationship of uplink PTRS ports, a medium, and a product. The method comprises: determining a default association relationship between an uplink PTRS port and an uplink DMRS port according to a port association rule, wherein the maximum number of uplink DMRS ports allocated to a terminal is eight. The method is used for supporting the implementation of a related function when the terminal uses at most eight transmitting antenna ports.

## Description

### TECHNICAL FIELD

The disclosure relates to a communication field, in particular to a method for determining an association relationship of an uplink phase tracking reference signal (PTRS) port, an apparatus for determining an association relationship of an uplink PTRS port, a medium and a product.

### BACKGROUND

In a 5G new radio system, a phase tracking reference signal (PTRS) is designed for an estimation of common phase error (CPE).

During uplink transmission, a plurality of antenna ports may be configured for a user equipment (UE), and the UE supports a maximum of four antenna ports for a transmission of a demodulation reference signal (DMRS). One or two uplink DMRS ports that are associated with an uplink PTRS port are determined from four uplink DMRS ports.

### SUMMARY

Embodiments of the disclosure provide a method for determining an association relationship of an uplink phase tracking reference signal (PTRS) port, an apparatus for determining an association relationship of an uplink PTRS port, a medium and a product. The technical solutions are provided as follows.

According to a first aspect of the embodiments of the disclosure, a method for determining an association relationship of an uplink PTRS port, performed by a terminal, is provided. The method includes:
determining, according to a port association rule, a default association relationship between an uplink PTRS port and an uplink demodulation reference signal (DMRS) port, in which the default association relationship indicates a transmission of a PTRS;
in which a maximum number of the uplink DMRS ports allocated to the terminal is 8.

According to a second aspect of the embodiments of the disclosure, an apparatus for determining an association relationship of an uplink PTRS port is provided. The apparatus includes:
a processing module, configured to determine, according to a port association rule, a default association relationship between an uplink PTRS port and an uplink DMRS port, in which the default association relationship indicates a transmission of a PTRS;
in which a maximum number of the uplink DMRS ports allocated to the terminal is 8.

According to a third aspect of the embodiments of the disclosure, a terminal is provided. The terminal includes:
a processor; and
a transceiver connected to the processor;
in which the processor is configured to load and execute an executable instruction to implement the method for determining the association relationship of the uplink PTRS port as described in the above aspects.

According to a fourth aspect of the embodiments of the disclosure, a computer-readable storage medium is provided, which having at least one instruction, at least one program, code set or instruction set stored thereon. The at least one instruction, the at least one program, code set or instruction set is loaded and executed by a processor to implement the method for determining the association relationship of the uplink PTRS port as described in the above aspects.

According to a fifth aspect of the embodiments of the disclosure, a computer program product (or a computer programs) including computer instructions is provided. The computer instructions are stored in a computer-readable storage medium and are read from the computer-readable storage medium by a processor of a computer device. The processor executes the computer instructions to cause the computer device to implement the method for determining the association relationship of the uplink PTRS port as described in the above aspects.

The technical solutions provided by the embodiments of the disclosure may include the following beneficial effects.

According to the above method for determining the association relationship of the uplink PTRS port, the terminal determines, according to the port association rule, the default association relationship between the uplink PTRS port and the uplink DMRS port, and determines one or two uplink DMRS ports associated with the uplink PTRS port from a maximum of eight uplink DMRS ports. The method supports the implementation of relevant functions in a case that the terminal uses a maximum of eight transmitting antenna ports, e.g., supports an estimation of common phase error (CPE) in a case that the terminal uses eight transmitting antenna ports.

It is understandable that the foregoing general description and the following detailed descriptions are exemplary and explanatory only and do not limit the disclosure.

### BRIEF DESCRIPTION OF THE DRAWINGS

In order to clearly illustrate technical solutions of the embodiments of the disclosure, a brief introduction of drawings required in the description of the embodiments is given below. Obviously, the drawings in the following descriptions are only part of the embodiments of the disclosure, and for those skilled in the art, other drawings may be obtained according to these drawings without creative labor.
FIG. 1 is a block diagram of a communication system according to an exemplary embodiment.
FIG. 2 is a flowchart of a method for determining an association relationship of an uplink phase tracking reference signal (PTRS) port according to an exemplary embodiment.
FIG. 3 is a flowchart of a method for determining an association relationship of an uplink PTRS port according to another exemplary embodiment.
FIG. 4 is a flowchart of a method for determining an association relationship of an uplink PTRS port according to another exemplary embodiment.
FIG. 5 is a flowchart of a method for determining an association relationship of an uplink PTRS port according to another exemplary embodiment.
FIG. 6 is a flowchart of a method for determining an association relationship of an uplink PTRS port according to another exemplary embodiment.
FIG. 7 is a block diagram of an apparatus for determining an association relationship of an uplink PTRS port according to an exemplary embodiment.
FIG. 8 is a schematic diagram of a terminal according to an exemplary embodiment.
FIG. 9 is a schematic diagram of a network device according to an exemplary embodiment.

### DETAILED DESCRIPTION

The embodiments will be described in detail herein, and examples of the embodiments are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the disclosure as detailed in the attached claims.

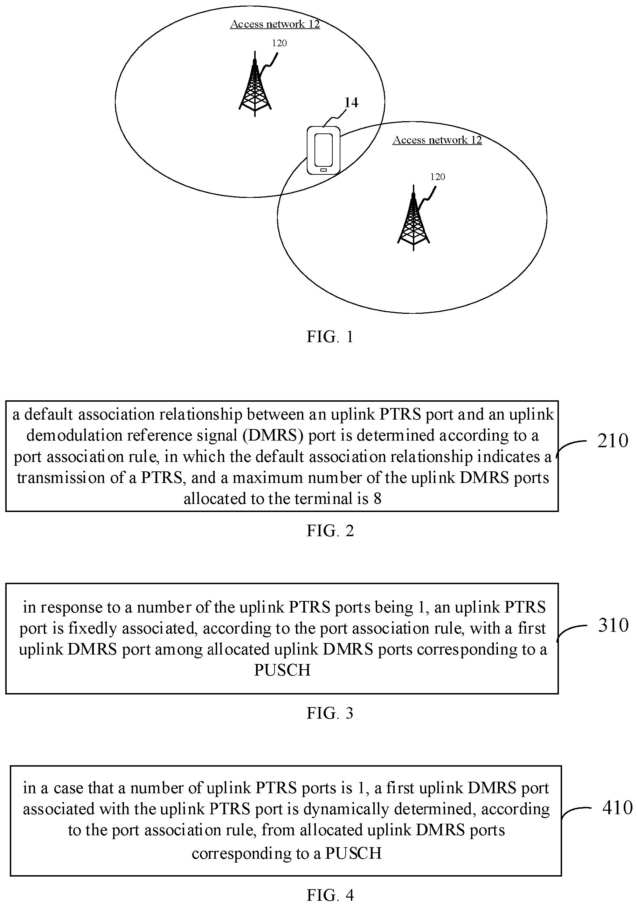

FIG. 1 is a block diagram of a communication system according to an exemplary embodiment. The communication system may include: an access network 12 and a user terminal 14.

The access network 12 includes several network devices 120. The network device (or referred to as a network equipment) 120 may be a base station, which is a device deployed in the access network to provide a wireless communication function for the user terminal (referred to as a terminal) 14. The base station may include various forms of macro base stations, micro base stations, relay stations, access points, etc. In systems that use different radio access technologies, the name of device with functions of the base station may be different. For example, in a long term evolution (LTE) system, the device is called eNodeB or eNB; and in a 5G new radio (NR) system, the device is called gNodeB or gNB. As communication technologies evolve, the "base station" may be described differently. For the convenience of description in the embodiments of the disclosure, the above-described devices that provide the wireless communication function for the user terminal 14 are collectively referred to as the network device.

The user terminal 14 may include a variety of handheld devices, vehicle-mounted devices, wearable devices, computing devices, or other processing devices connected to wireless modems, with the wireless communication function, and various forms of user equipment, mobile stations (MSs), terminal devices, etc. For ease of description, the devices mentioned above are collectively referred to as the user terminal. The network device 120 and the user terminal 14 may communicate with each other via some sort of radio interface technology, such as a Uu interface.

For example, there are two kinds of communication scenarios between the network device 120 and the user terminal 14, i.e., uplink communication scenario and downlink communication scenario. Uplink communication refers to sending signals to the network device 120, and downlink communication refers to sending signals to the user terminal 14.

The technical solutions of the embodiments of the disclosure may be applied to various types of communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, an Advanced long Term Evolution (LTE-A) system, a new radio (NR) system, an evolved system of NR system, a LTE-based access to Unlicensed spectrum (LTE-U) system, a NR-U system, a Universal Mobile Telecommunication System (UMTS), a Worldwide Interoperability for Microwave Access (WiMAX) communication system, a Wireless Local Area Networks (WLAN), a Wireless Fidelity (WiFi), and a next-generation communication system, or other communication systems, etc.

Generally, a conventional communication systems supports a limited number of connections and is easy to implement. However, with the development of the communication technologies, a mobile communication system will not only support a conventional communication, but also support such as a Device to Device (D2D) communication, a Machine to Machine (M2M) communication, a Machine Type Communication (MTC), a Vehicle to Vehicle (V2V) communication, and a Vehicle to Everything (V2X) system, etc. Embodiments of the disclosure may also be applied to these communication systems.

FIG. 2 is a flowchart of a method for determining an association relationship of an uplink phase tracking reference signal (PTRS) port according to an exemplary embodiment. The method is applied to a terminal in the communication system shown in FIG. 1. The method includes the following steps.

At step 210, a default association relationship between an uplink PTRS port and an uplink demodulation reference signal (DMRS) port is determined according to a port association rule, in which the default association relationship indicates a transmission of a PTRS, and a maximum number of the uplink DMRS ports allocated to the terminal is 8.

For example, in a case that the terminal measures a quality of an uplink channel, the terminal may map a sounding reference signal (SRS) resource on a physical resource (PR) of the uplink channel, allocate the SRS resource for the uplink DMRS port, and associate the uplink DMRS port with the uplink PTRS port. The above PR refers to continuous carrier resources in a frequency domain, and one physical resource block (PRB) corresponds to twelve continuous carriers in the frequency domain and one slot in a time domain. The above uplink channel includes at least one of: a physical uplink control channel (PUCCH) and a physical uplink shared channel (PUSCH).

The above port association rule defines the default association relationship between the uplink PTRS port and the uplink DMRS port. The terminal may, based on the above port association rule, associate the uplink DMRS port, among a maximum of eight (including eight) uplink DMRS ports corresponding to the SRS resource, with the uplink PTRS port, in order to send the PTRS via the uplink PTRS port on the SRS resource. Optionally, the above port association rule may be pre-configured by the network device for the terminal or may be defined by a protocol.

Optionally, a number of the uplink DMRS ports may be N. The value of N is a positive integer not greater than 8, i.e., the number of the uplink DMRS ports may be one of 1-8. Or, the value N is an integer greater than 4 and not greater than 8, i.e., the number of the uplink DMRS ports may be one of 5-8. For example, the number of the uplink DMRS ports may be configured by the network device for the terminal. For example, the network device configures the number of the uplink DMRS ports to be 8 for the terminal.

Optionally, the maximum of eight uplink DMRS ports mentioned above are allocated by the network device to the terminal. For example, the network device allocates all or some of the uplink DMRS ports to the terminal. For example, if there are eight uplink DMRS ports available for the network device to allocate, the network device allocates some or all of the eight uplink DMRS ports to the terminal. If there are twelve uplink DMRS ports available for the network device to allocate, the network device allocates some of the twelve uplink DMRS ports to the terminal. In a case where eight uplink DMRS ports is allocated to the terminal, the network device allocates all the eight uplink DMRS ports 0-7 to the terminal, or the network device allocates eight uplink DMRS ports among the twelve uplink DMRS ports 0-11 to the terminal, e.g., the network device allocates uplink DMRS ports 0-7 among the twelve uplink DMRS ports to the terminal, or the network device allocates uplink DMRS ports 4-11 among the twelve uplink DMRS ports to the terminal.

Optionally, the number of the uplink PTRS ports mentioned above is 1 or 2.

If the number of the uplink PTRS ports is 1, the terminal determines, according to the port association rule, that there is the default association relationship between one uplink DMRS port, among the maximum of eight uplink DMRS ports, and one uplink PTRS port. That is, according to the port association rule, one uplink PTRS port is associated by default to one uplink DMRS port among the maximum of eight uplink DMRS ports.

If the number of uplink PTRS ports is 2, the terminal determines, according to the port association rule, that there is the default association relationship between a first uplink DMRS port, among the maximum of eight uplink DMRS ports, and a first uplink PTRS port, and there is the default association relationship between a second uplink DMRS port, among the maximum of eight uplink DMRS ports, and a second uplink PTRS port. That is, according to the port association rule, the first uplink PTRS port is associated by default to the first uplink DMRS port among the maximum of eight uplink DMRS ports, and the second uplink PTRS port is associated by default to the second uplink DMRS port among the maximum of eight uplink DMRS ports. The second uplink PTRS port above is the uplink PTRS port other than the first uplink PTRS port among the two uplink PTRS ports, and the second uplink DMRS port above is the uplink DMRS port other than the first uplink DMRS port among the maximum of eight uplink DMRS ports.

For example, the number of the uplink PTRS ports mentioned above may be configured by the network device for the terminal. For example, after receiving, by the terminal, downlink control information (DCI) sent by the network device on a media access control (MAC) layer, it is determined that the number of the uplink PTRS ports is 1 or 2 based on an indication of the DCI. For example, the terminal receives a high-layer signaling (such as radio resource control (RRC)) sent by the network device, and determines the number of the uplink PTRS ports to be 1 or 2 based on an indication of the high-level signaling.

Or, the number of the uplink PTRS ports may be determined by the terminal. For example, in a scenario of Code Book (CB)-based PUSCH transmission, the number of uplink PTRS ports is determined in any of the following ways.
1) In the scenario of the CB-based PUSCH transmission using a full coherent transmission mode, if a SRS resource indicator (SRI) indicates only one SRS resource, the terminal determines that the number of PTRS ports is 1.
2) In the scenario of the CB-based PUSCH transmission using a partial coherent or non-coherent transmission mode, if a number of layers indicated by a transmitted precoding matrix indicator (TPMI) is 1 or 2, the terminal determines that the number of PTRS ports is 1.
3) In the scenario of the CB-based PUSCH transmission using the full coherent transmission mode, if the SRI only indicates one SRS resource, the terminal determines that the number of PTRS ports is 2.
4) In the scenario of the CB-based PUSCH transmission using the partial coherent or non-coherent transmission mode, if a number of layers indicated by the TPMI is 2 or more or 3 or more, the terminal determines that the number of PTRS ports is 2.

For example, the maximum of eight uplink DMRS ports (i.e., antenna ports corresponding to the DMRS) may be antenna ports mapped to the same antenna panel or different antenna panels. That is, the maximum of eight uplink DMRS ports are antenna ports mapped to M antenna panels, M being a positive integer less than or equal to 8. For example, four uplink DMRS ports among the eight uplink DMRS ports are mapped to a first antenna panel, and the other four uplink DMRS ports among the eight uplink DMRS ports are mapped to a second antenna panel.

In conclusion, according to the method for determining the association relationship of the uplink PTRS port in the embodiments of the disclosure, the terminal determines, according to the port association rule, the default association relationship between the uplink PTRS port and the uplink DMRS port, and determines one or two uplink DMRS ports associated with the uplink PTRS port from the maximum of eight uplink DMRS ports. The method supports an estimation of common phase error (CPE) during uplink transmission, in a case that the terminal uses the maximum of eight transmitting antenna ports. For example, the method supports the terminal to use eight transmitting antenna ports to detect the CPE in a scenario of CB-based uplink transmission, or supports the terminal to use eight transmitting antenna ports to detect the CPE in a scenario of Non-Code Book (NCB)-based uplink transmission.

For example, the above step 210 can be implemented in at least one of the following scenarios.

In a first scenario, in a case that a transmit rank indicator (TRI) is greater than 1, the terminal determines, according to the port association rule, the default association relationship between the uplink PTRS port and the uplink DMRS port.

In a second scenario, in response to a configuration on a designated information field of downlink control information (DCI) being null, the terminal determines, according to the port association rule, the default association relationship between the uplink PTRS port and the uplink DMRS port.

For example, the above designated information domain is a PTRS-DMRS association domain.

In a third scenario, in a case that the PTRS is sent on a schedule-free uplink shared channel Type-1, the terminal determines, according to the port association rule, the default association relationship between the uplink PTRS port and the uplink DMRS port.

In conclusion, the method for determining the association relationship of the uplink PTRS port, according to the embodiments of the disclosure, defines the application scenarios in which the terminal uses the default association relationship between the uplink PTRS port and the uplink DMRS port, and the method supports the estimation of the CPE during uplink transmission, in the case that the terminal uses the maximum of eight transmitting antenna ports in different application scenarios.

For the case where the number of the uplink PTRS ports is 1, step 210 in FIG. 2 may be implemented by step 310, which is shown in FIG. 3.

At step 310, in response to a number of the uplink PTRS ports being 1, an uplink PTRS port is fixedly associated, according to the port association rule, with a first uplink DMRS port among allocated uplink DMRS ports corresponding to a PUSCH.

The above port association rule fixedly indicates the first uplink DMRS port, associated with the uplink PTRS port, among the maximum of eight (including eight) uplink DMRS ports.

Optionally, in a case that the number of transmitted code words (CWs) is 1, the above port association rule includes any of the following.
- The first uplink DMRS port is an uplink DMRS port corresponding to the maximum port number among the allocated uplink DMRS ports corresponding to the PUSCH.

For example, the eight uplink DMRS ports include uplink DMRS ports 0-7, the terminal determines that the first uplink DMRS port is the uplink DMRS port 7.
- The first uplink DMRS port is an uplink DMRS port corresponding to the minimum port number among the allocated uplink DMRS ports corresponding to the PUSCH.

For example, the eight uplink DMRS ports include uplink DMRS ports 0-7, the terminal determines that the first uplink DMRS port is the uplink DMRS port 0.

Optionally, in a case that the number of transmitted CWs is 2, the allocated uplink DMRS ports corresponding to the PUSCH are divided into two DMRS port groups, and the two DMRS port groups have a one-to-one correspondence with the two CWs. The above port association rule includes any one of the following.
- The first uplink DMRS port is an uplink DMRS port corresponding to the maximum port number among the uplink DMRS ports allocated in the DMRS port group corresponding to the CW with a higher modulation and coding scheme (MCS) level.

For example, a first DMRS port group corresponding to a first CW includes uplink DMRS ports 0-3, and a second DMRS port group corresponding to a second CW includes uplink DMRS ports 4-7. In a case where the MCS level of the first CW is higher than the MCS level of the second CW, the terminal determines the uplink DMRS port 3 in the first DMRS port group as the first uplink DMRS port. In a case where the MCS level of the second CW is higher than the MCS level of the first CW, the terminal determines the uplink DMRS port 7 in the second DMRS port group as the first uplink DMRS port.
- The first uplink DMRS port is an uplink DMRS port corresponding to the minimum port number among the uplink DMRS ports allocated in the DMRS port group corresponding to a CW with a higher MCS level.

For example, a first DMRS port group corresponding to a first CW includes uplink DMRS ports 0-3, and a second DMRS port group corresponding to a second CW includes uplink DMRS ports 4-7. In a case where the MCS level of the first CW is higher than the MCS level of the second CW, the terminal determines the uplink DMRS port 0 in the first DMRS port group as the first uplink DMRS port. In a case where the MCS level of the second CW is higher than the MCS level of the first CW, the terminal determines the uplink DMRS port 4 in the second DMRS port group as the first uplink DMRS port.
- The first uplink DMRS port is an uplink DMRS port corresponding to the maximum port number among uplink DMRS ports allocated in the DMRS port group corresponding to a first CW in the two CWs with an equal MCS level.

For example, a first DMRS port group corresponding to the first CW includes uplink DMRS ports 0-3, and a second DMRS port group corresponding to a second CW includes uplink DMRS ports 4-7. In a case where the MCS level of the first CW is equal to the MCS level of the second CW, the terminal determines the uplink DMRS port 3 in the first DMRS port group corresponding to the first CW as the first uplink DMRS port.
- The first uplink DMRS port is an uplink DMRS port corresponding to the minimum port number among the uplink DMRS ports allocated in the DMRS port group corresponding to a first CW in the two CWs with an equal MCS level.

For example, a first DMRS port group corresponding to the first CW includes uplink DMRS ports 0-3, and a second DMRS port group corresponding to a second CW includes uplink DMRS ports 4-7. In a case where the MCS level of the first CW is equal to the MCS level of the second CW, the terminal determines the uplink DMRS port 0 in the first DMRS port group corresponding to the first CW as the first uplink DMRS port.
- The first uplink DMRS port is an uplink DMRS port corresponding to the maximum port number among uplink DMRS ports allocated in the DMRS port group corresponding to a second CW in the two CWs with an equal MCS level.

For example, a first DMRS port group corresponding to a first CW includes uplink DMRS ports 0-3, and a second DMRS port group corresponding to the second CW includes uplink DMRS ports 4-7. In a case where the MCS level of the first CW is equal to the MCS level of the second CW, the terminal determines the uplink DMRS port 7 in the second DMRS port group corresponding to the second CW as the first uplink DMRS port.
- The first uplink DMRS port is an uplink DMRS port corresponding to the minimum port number among the uplink DMRS ports allocated in the DMRS port group corresponding to a second CW in the two CWs with an equal MCS level.

For example, a first DMRS port group corresponding to a first CW includes uplink DMRS ports 0-3, and a second DMRS port group corresponding to the second CW includes uplink DMRS ports 4-7. In a case where the MCS level of the first CW is equal to the MCS level of the second CW, the terminal determines the uplink DMRS port 4 in the second DMRS port group corresponding to the second CW as the first uplink DMRS port.

The second DMRS port group mentioned above is the DMRS port group among the two DMRS port groups mentioned above other than the first DMRS port group. The second CW mentioned above is another CW in the two CWs mentioned above other than the first CW. For example, the first CW may be represented as CW0, and the second CW may be represented as CW1.

Optionally, in a case that the number of transmitted CWs is 2, the maximum of eight (including eight) uplink DMRS ports are allocated to the terminal on the PUSCH. The maximum of 8 uplink DMRS ports are divided into two DMRS port groups, and the two DMRS port groups have a one-to-one correspondence with the two CWs. The above port association rule includes any of the following.
- In response to the number of CWs being 2, the first uplink DMRS port is an uplink DMRS port corresponding to the maximum port number among the allocated uplink DMRS ports corresponding to the PUSCH.
- In response to the number of CWs being 2, the first uplink DMRS port is an uplink DMRS port corresponding to the minimum port number among the allocated uplink DMRS ports corresponding to the PUSCH.

Optionally, the above port association rule may also include that: the first uplink DMRS port is any uplink DMRS port, among the allocated uplink DMRS ports corresponding to the PUSCH, other than the uplink DMRS port corresponding to the minimum port number.

For example, the terminal determines any one of the uplink DMRS ports 1-7, among the allocated eight uplink DMRS ports, as the first uplink DMRS port, such as the uplink DMRS port 1.

Optionally, the allocated uplink DMRS ports corresponding to the PUSCH are allocated by the network device via DCI, or configured by the network device via a RRC signaling.

In conclusion, according to the method for determining the association relation of the uplink PTRS port in the embodiments of the disclosure, in response to the number of uplink PTRS ports being 1, the terminal fixedly associates, according to the port association rule, the uplink PTRS port with one uplink DMRS port among the maximum of eight uplink DMRS ports. The method supports the estimation of the CPE during uplink transmission in the case that the terminal uses the maximum of eight transmitting antenna ports. For example, the method supports the terminal to use eight transmitting antenna ports to detect the CPE in a scenario of CB-based uplink transmission, or supports the terminal to use eight transmitting antenna ports to detect the CPE in a scenario of NCB-based uplink transmission.

For the case where the number of uplink PTRS ports is 1, step 210 in FIG. 2 may be implemented by step 410, which is shown in FIG. 4.

At step 410, in a case that a number of uplink PTRS ports is 1, a first uplink DMRS port associated with the uplink PTRS port is dynamically determined, according to the port association rule, from allocated uplink DMRS ports corresponding to a PUSCH.

The above second port association rule dynamically indicates the first uplink DMRS port, among the maximum of eight uplink DMRS ports, associated with the uplink PTRS port. For example, the maximum of eight uplink DMRS ports mentioned above are configured on the PUSCH by the network device for the terminal.

For example, when the terminal sends the PTRS for multiple times, different uplink DMRS ports among the eight uplink DMRS ports may be configured to associate with the first uplink DMRS port. For example, when the terminal sends the PTRS for the first time, it determines that the uplink DMRS port 0 is associated with the uplink PTRS port. When the terminal sends the PTRS for the second time, it determines that the uplink DMRS port 2 is associated with the uplink PTRS port. When the terminal sends the PTRS for the third time, it determines that the uplink DMRS port 4 is associated with the uplink PTRS port.

Optionally, in a case that the terminal uses a schedule-free PUSCH transmission, corresponding to the PTRS transmitted on each transmission occasion on the PUSCH, starting from a predefined port number, one uplink DMRS port among the allocated uplink DMRS ports corresponding to the PUSCH is cyclically selected as the first uplink DMRS port in the order of port numbers of the uplink DMRS ports. That is, on each transmission occasion of multiple PTRS transmission, starting from a predefined port number, the terminal cyclically selects one uplink DMRS port among the allocated uplink DMRS ports corresponding to the PUSCH each time as the first uplink DMRS port in the order of port numbers of the uplink DMRS ports. For example, starting from a predefined port number, the terminal cyclically selects one uplink DMRS port among all the eight uplink DMRS ports (or a portion of the eight uplink DMRS ports) as the first uplink DMRS port in the order of the port numbers. The predefined port number may be the minimum port number or the maximum port number. For example, in a case that the terminal sends the PTRS for multiple times, if the number of transmission times of the PTRS is greater than or equal to the number of uplink DMRS ports, one uplink DMRS port among the eight uplink DMRS ports is cyclically selected as the first uplink DMRS port in the order of port numbers 0-7. That is, when the terminal sends the PTRS for the first time, it determines that the uplink DMRS port 0 is associated with the uplink PTRS port; when the terminal sends the PTRS for the second time, it determines that the uplink DMRS port 1 is associated with the uplink PTRS port;......; when the terminal sends the PTRS for the eighth time, it determines that the uplink DMRS port 7 is associated with the uplink PTRS port; when the terminal sends the PTRS for the ninth time, it determines that the uplink DMRS port 0 is associated with the uplink PTRS port;......; until the transmission of the PTRS is completed. For another example, in a case that the terminal sends the PTRS for multiple times, if the number (L) of transmission times of the PTRS is less than the number of uplink DMRS ports, one uplink DMRS port among the L uplink DMRS ports (i.e. a portion of the eight uplink DMRS ports) is cyclically selected as an uplink DMRS port associated with the uplink PTRS port in the order of port numbers 0-(L-1), in which L is a positive integer less than 8. For example, if the number of transmission times of the PTRS is 6, when the terminal sends the PTRS for the first time, it determines that the uplink DMRS port 0 is associated with the uplink PTRS port; when the terminal sends the PTRS for the second time, it determines that the uplink DMRS port 1 is associated with the uplink PTRS port;......; when the terminal sends the PTRS for the sixth time, it determines that the uplink DMRS port 5 is associated with the uplink PTRS port, and then the transmission of the PTRS is completed.

Optionally, the allocated uplink DMRS ports corresponding to the PUSCH are allocated by the network device via DCI, or configured by the network device via a RRC signaling.

In conclusion, according to the method for determining the association relation of the uplink PTRS port in the embodiments of the disclosure, in response to the number of uplink PTRS ports being 1, the terminal dynamically associates, according to the port association rule, the uplink PTRS port with one uplink DMRS port among the maximum of eight uplink DMRS ports, The method supports the estimation of the CPE during uplink transmission in the case that the terminal uses eight transmitting antenna ports.

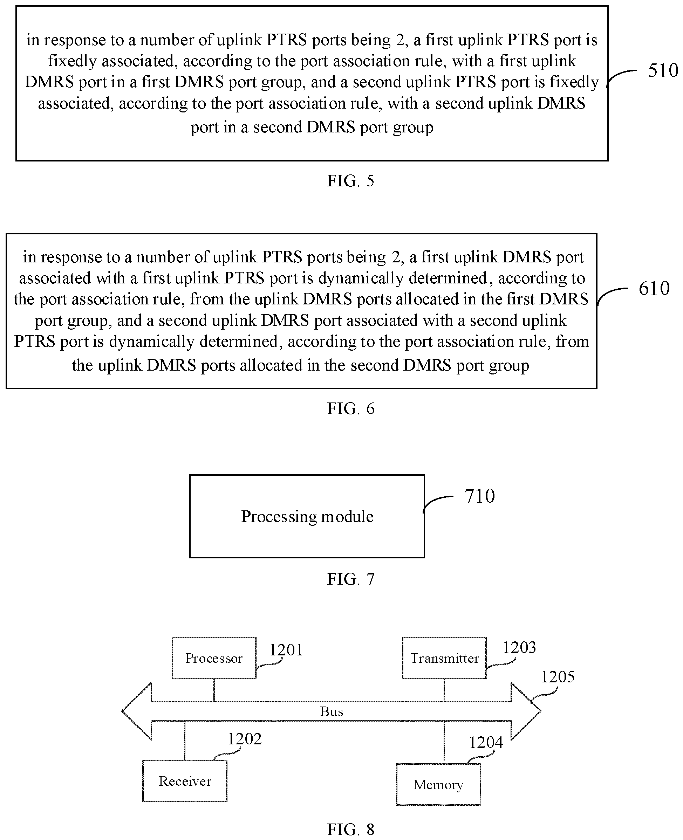

For the case where the number of uplink PTRS ports is 2, step 210 in FIG. 2 may be implemented by step 510, which is shown in FIG. 5.

At step 510, in response to a number of uplink PTRS ports being 2, a first uplink PTRS port is fixedly associated, according to the port association rule, with a first uplink DMRS port in a first DMRS port group, and a second uplink PTRS port is fixedly associated, according to the port association rule, with a second uplink DMRS port in a second DMRS port group.

The allocated uplink DMRS ports corresponding to the PUSCH are divided into two DMRS port groups, i.e., the two DMRS port groups includes the first DMRS port group and the second DMRS port group. The first uplink PTRS port is one of the two uplink PTRS ports, the second uplink PTRS port is another uplink PTRS port in the two uplink PTRS ports other than the first uplink PTRS port. The second DMRS port group is one DMRS port group in the two DMRS port groups other than the first DMRS port group. For example, each DMRS port group may include four uplink DMRS ports.

For example, the above port association rule fixedly indicates the first uplink DMRS port, associated with the first uplink PTRS port, among the maximum of eight uplink DMRS ports, and fixedly indicates the second uplink DMRS port, associated with the second uplink PTRS port, among the maximum of eight uplink DMRS ports.

For example, there is a one-to-one correspondence between the first uplink PTRS port and the first DMRS port group, and there is also a one-to-one correspondence between the second uplink PTRS port and the second DMRS port group. The first DMRS port group includes an uplink DMRS port 0, an uplink DMRS port 2, an uplink DMRS port 4 and an uplink DMRS port 6, and the second DMRS port group includes an uplink DMRS port 1, an uplink DMRS port 3, an uplink DMRS port 5 and an uplink DMRS port 7. The terminal fixedly determines, according to the port association rule, the uplink DMRS port 2 as the first uplink DMRS port from the first DMRS port group, and fixedly determines, according to the port association rule, the uplink DMRS port 5 as the second uplink DMRS port from the second DMRS port group.

Optionally, in response to the number of CWs being 1, the above port association rule includes any one of the following.
- The first uplink DMRS port is an uplink DMRS port corresponding to the maximum port number among the uplink DMRS ports allocated in the first DMRS port group, and the second uplink DMRS port is an uplink DMRS port corresponding to the maximum port number among the uplink DMRS ports allocated in the second DMRS port group.

For example, when the uplink DMRS ports allocated to the terminal are uplink DMRS ports 0-7, the first DMRS port group includes uplink DMRS ports 0-3, and the second DMRS port group includes uplink DMRS ports 4-7. The terminal determines the uplink DMRS port 3 in the allocated DMRS port group as the first uplink DMRS port, and determines the uplink DMRS port 7 as the second uplink DMRS port.
- The first uplink DMRS port is an uplink DMRS port corresponding to the minimum port number among the uplink DMRS ports allocated in the first DMRS port group, and the second uplink DMRS port is an uplink DMRS port corresponding to the minimum port number among the uplink DMRS ports allocated in the second DMRS port group.

For example, when the uplink DMRS ports allocated to the terminal are uplink DMRS ports 0-7, the first DMRS port group includes uplink DMRS ports 0-3, and the second DMRS port group includes uplink DMRS ports 4-7. The terminal determines the uplink DMRS port 0 in the allocated port group as the first uplink DMRS port, and determines the uplink DMRS port 4 as the second uplink DMRS port.
- The first uplink DMRS port is an uplink DMRS port corresponding to the maximum port number among the uplink DMRS ports allocated in the first DMRS port group, and the second uplink DMRS port is an uplink DMRS port corresponding to the minimum port number among the uplink DMRS ports allocated in the second DMRS port group.

For example, when the uplink DMRS ports allocated by the terminal are uplink DMRS ports 0-7, the first DMRS port group includes uplink DMRS ports 0-3, and the second DMRS port group includes uplink DMRS ports 4-7. The terminal determines the uplink DMRS port 3 in the allocated port group as the first uplink DMRS port, and determines the uplink DMRS port 4 as the second uplink DMRS port.
- The first uplink DMRS port is an uplink DMRS port corresponding to the minimum port number among the uplink DMRS ports allocated in the first DMRS port group, and the second uplink DMRS port is an uplink DMRS port corresponding to the maximum port number among the uplink DMRS ports allocated in the second DMRS port group.

For example, when the uplink DMRS ports allocated by the terminal are uplink DMRS ports 0-7, the first DMRS port group includes uplink DMRS ports 0-3, and the second DMRS port group includes uplink DMRS ports 4-7. The terminal determines the uplink DMRS port 0 in the allocated port group as the first uplink DMRS port, and determines the uplink DMRS port 7 as the second uplink DMRS port.

Optionally, in response to a number of CWs being 2, the two DMRS port groups correspond one-to-one to the two CWs, and the port association rule includes any one of the following.
- The first uplink DMRS port is an uplink DMRS port corresponding to the maximum port number among the uplink DMRS ports allocated in the DMRS port group corresponding to a first CW; or
- The first uplink DMRS port is an uplink DMRS port corresponding to the minimum port number among the uplink DMRS ports allocated in the DMRS port group corresponding to a first CW.

Optionally, in response to a number of CWs being 2, the two DMRS port groups correspond one-to-one to the two CWs, and the port association rule includes any one of the following:
- the second uplink DMRS port is an uplink DMRS port corresponding to the maximum port number among the uplink DMRS ports allocated in the DMRS port group corresponding to a second CW; or
- the second uplink DMRS port is an uplink DMRS port corresponding to the minimum port number among the uplink DMRS ports allocated in the DMRS port group corresponding to a second CW.

Optionally, the port association rule may further include that: the first uplink DMRS port is any uplink DMRS port among the uplink DMRS ports allocated in the first DMRS port group other than the uplink DMRS port corresponding to the minimum port number, and the second uplink DMRS port is any uplink DMRS port among the uplink DMRS ports allocated in the second DMRS port group other than the uplink DMRS port corresponding to the minimum port number.

For example, the first DMRS port group includes uplink DMRS ports 0-3, and the second DMRS port group includes uplink DMRS ports 4-7. The terminal determines any one of the uplink DMRS ports from the uplink DMRS ports 1-3 as the first uplink DMRS port, and determines any one of the uplink DMRS ports from the uplink DMRS ports 5-7 as the second uplink DMRS port.

Optionally, the allocated uplink DMRS ports corresponding to the PUSCH are allocated by the network device via DCI, or configured by the network device via a RRC signaling.

Optionally, the uplink DMRS ports in each DMRS port group are configured by the network device via a high-layer signaling, or the uplink DMRS ports in each DMRS port group are predefined.

In conclusion, according to the method for determining the association relationship of the uplink PTRS port in the embodiments of the disclosure, in response to the number of uplink PTRS ports being 2, the terminal fixedly associates, according to the port association rule, the two uplink PTRS ports with the two uplink DMRS ports among the maximum of eight uplink DMRS ports, respectively. The method supports the estimation of the CPE during uplink transmission in the case that the terminal uses the maximum of eight transmitting antenna ports, for example, supports the terminal to use 8 transmitting antenna ports to detect the CPE detection in a scenario of CB-based uplink transmission, or supports the terminal to use eight transmitting antenna ports to detect the CPE in a scenario of NCB-based uplink transmission.

For the case where the number of uplink PTRS ports is 2, step 210 in FIG. 2 may be implemented by step 610, which is shown in FIG. 6.

At step 610, in response to a number of uplink PTRS ports being 2, a first uplink DMRS port associated with a first uplink PTRS port is dynamically determined, according to the port association rule, from the uplink DMRS ports allocated in the first DMRS port group, and a second uplink DMRS port associated with a second uplink PTRS port is dynamically determined, according to the port association rule, from the uplink DMRS ports allocated in the second DMRS port group.

The allocated uplink DMRS ports corresponding to the PUSCH are divided into two DMRS port groups, i.e., the two DMRS port groups includes a first DMRS port group and a second DMRS port group. The first uplink PTRS port is one uplink PTRS port among the two uplink PTRS ports, and the second uplink PTRS port is another uplink PTRS port among the two uplink PTRS ports other than the first uplink PTRS port. The second DMRS port group is one DMRS port group among the two DMRS port groups other than the first DMRS port group. For example, each DMRS port group may include four uplink DMRS ports.

For example, the above port association rule dynamically indicates the first uplink DMRS port, among the maximum of eight uplink DMRS ports, associated with the first uplink PTRS port, and dynamically indicates the second uplink DMRS port, among the maximum of eight uplink DMRS ports, associated with the second uplink PTRS port.

Optionally, in a case that the terminal uses a schedule-free PUSCH transmission, corresponding to the PTRS transmitted on each transmission occasion on the PUSCH, starting from a predefined port number, one uplink DMRS port among the uplink DMRS ports allocated in the first DMRS port group is cyclically selected as the first uplink DMRS port in the order of port numbers of the uplink DMRS ports. Or, in a case that the terminal uses a schedule-free PUSCH transmission, corresponding to the PTRS transmitted on each transmission occasion on the PUSCH, starting from a predefined port number, one uplink DMRS port among the uplink DMRS ports allocated in the second DMRS port group is cyclically selected as the second uplink DMRS port in the order of port numbers of the uplink DMRS ports.

That is, in the case that the terminal uses the schedule-free transmission, one of the at least two uplink DMRS ports allocated in the first DMRS port group is cyclically selected, corresponding to the PTRS transmitted on each transmission occasion on the PUSCH, as the first uplink DMRS port in the order of port numbers of the uplink DMRS ports starting from the predefined DMRS port number among the allocated DMRS ports; and in the case that the terminal uses the schedule-free transmission, one of the at least two uplink DMRS ports allocated in the second DMRS port group is cyclically selected, corresponding to the PTRS transmitted on each transmission occasion on the PUSCH, as the second uplink DMRS port in the order of port numbers of the uplink DMRS ports starting from the predefined DMRS port number.

For example, the predefined port number is the maximum port number or the minimum port number.

For example, there is a one-to-one correspondence between the first uplink PTRS port and the first DMRS port group, and there is also a one-to-one correspondence between the second uplink PTRS port and the second MRS port group. The first DMRS port group includes an uplink DMRS port 0, an uplink DMRS port 2, an uplink DMRS port 4 and an uplink DMRS port 6, and the second DMRS port group includes an uplink DMRS port 1, an uplink DMRS port 3, an uplink DMRS port 5 and an uplink DMRS port 7. In a case of sending the PTRS for multiple times, the terminal cyclically selects the uplink DMRS port 0, the uplink DMRS port 2, the uplink DMRS port 4, and the uplink DMRS port 6 as the first uplink DMRS port in this sequence; and cyclically selects the uplink DMRS port 1, the uplink DMRS port 3, the uplink DMRS port 5, and the uplink DMRS port 7 as the second uplink DMRS port in this sequence. It should be noted that the above method for cyclically determining the uplink DMRS port in different cases where the number of transmission times of the PTRS is greater than, less than, or equal to the number of uplink DMRS ports.

Optionally, the allocated uplink DMRS ports corresponding to the PUSCH are allocated by the network device via DCI, or the allocated uplink DMRS ports corresponding to the PUSCH are configured by the network device via a RRC signaling.

Optionally, the uplink DMRS ports in each DMRS port group are configured by the network device via a high-layer signaling, or the uplink DMRS ports in each DMRS port group are predefined.

In conclusion, according to the method for determining the association relationship of the uplink PTRS port in the embodiments of the disclosure, in response to the number of uplink PTRS ports being 2, the terminal dynamically associates, according to the port association rule, the two uplink PTRS ports with the two uplink DMRS ports among the maximum of eight uplink DMRS ports, respectively. The method supports the estimation of the CPE during uplink transmission in the case that the terminal uses eight transmitting antenna ports, for example, supports the terminal to use eight transmitting antenna ports to detect the CPE in a scenario of CB-based uplink transmission, or supports the terminal to use eight transmitting antenna ports to detect the CPE in a scenario of NCB-based uplink transmission.

FIG. 7 is a block diagram of an apparatus for determining an association relationship of an uplink PTRS port according to an exemplary embodiment. The apparatus may be achieved as a part or all of a user equipment (UE) by software, hardware or a combination of both. The apparatus includes:
a processing module 710 configured to determine, according to a port association rule, a default association relationship between an uplink PTRS port and an uplink DMRS port, in which the default association relationship indicates a transmission of a PTRS;
in which a maximum number of the uplink DMRS ports allocated to a terminal is 8.

In some embodiments, the processing module 710 is configured to: in response to a number of the uplink PTRS ports being 1, fixedly associate an uplink PTRS port with a first uplink DMRS port among allocated uplink DMRS ports corresponding to a PUSCH according to the port association rule.

In some embodiments, the port association rule includes that:
in response to a number of CWs being 1, the first uplink DMRS port is an uplink DMRS port corresponding to the maximum port number among the allocated uplink DMRS ports corresponding to the PUSCH; or
in response to the number of CWs being 1, the first uplink DMRS port is an uplink DMRS port corresponding to the minimum port number among the allocated uplink DMRS ports corresponding to the PUSCH.

In some embodiments, in response to the number of CWs being 2, the allocated uplink DMRS ports corresponding to the PUSCH are divided into two DMRS port groups, the two DMRS port groups correspond one-to-one to the two CWs, and the port association rule includes that:
the first uplink DMRS port is an uplink DMRS port corresponding to the maximum port number among the uplink DMRS ports allocated in the DMRS port group corresponding to the CW with a higher MCS level; or
the first uplink DMRS port is an uplink DMRS port corresponding to the minimum port number among the uplink DMRS ports allocated in the DMRS port group corresponding to the CW with a higher MCS level; or
the first uplink DMRS port is an uplink DMRS port corresponding to the maximum port number among the uplink DMRS ports allocated in the DMRS port group corresponding to a first CW in the two CWs with an equal MCS level; or
the first uplink DMRS port is an uplink DMRS port corresponding to the minimum port number among the uplink DMRS ports allocated in the DMRS port group corresponding to a first CW in the two CWs with an equal MCS level; or
the first uplink DMRS port is an uplink DMRS port corresponding to the maximum port number among the uplink DMRS ports allocated in the DMRS port group corresponding to a second CW in the two CWs with an equal MCS level; or
the first uplink DMRS port is an uplink DMRS port corresponding to the minimum port number among the uplink DMRS ports allocated in the DMRS port group corresponding to a second CW in the two CWs with an equal MCS level.

In some embodiments, the port association rule includes that:
in response to a number of CWs being 2, the first uplink DMRS port is an uplink DMRS port corresponding to the maximum port number among the allocated uplink DMRS ports corresponding to the PUSCH; or
in response to the number of CWs being 2, the first uplink DMRS port is an uplink DMRS port corresponding to the minimum port number among the allocated uplink DMRS ports corresponding to the PUSCH.

In some embodiments, the port association rule includes that:
the first uplink DMRS port is any uplink DMRS port among the allocated uplink DMRS ports corresponding to the PUSCH other than an uplink DMRS port corresponding to the minimum port number.

In some embodiments, the processing module 710 is configured to: in response to a number of the uplink PTRS ports being 1, dynamically determine, according to the port association rule, a first uplink DMRS port associated with the uplink PTRS port from the allocated uplink DMRS ports corresponding to the PUSCH.

In some embodiments, the port association rule includes that:
in a case of using a schedule-free PUSCH transmission, selecting cyclically, corresponding to the PTRS transmitted on each transmission occasion on the PUSCH, starting from a predefined port number, and in an order of port numbers of the uplink DMRS ports, one uplink DMRS port among the allocated uplink DMRS ports corresponding to the PUSCH as the first uplink DMRS port.

In some embodiments, the allocated uplink DMRS ports corresponding to the PUSCH are divided into two DMRS port groups, and the two DMRS port groups includes a first DMRS port group and a second DMRS port group.

The processing module 710 is configured to: in response to a number of uplink PTRS ports being 2, fixedly associate, according to the port association rule, a first uplink PTRS port with a first uplink DMRS port in the first DMRS port group, where the first uplink PTRS port is one uplink PTRS port among the two uplink PTRS ports; and
fixedly associate, according to the port association rule, a second uplink PTRS port with a second uplink DMRS port in the second DMRS port group, where the second uplink PTRS port is another uplink PTRS port among the two uplink PTRS ports other than the first uplink PTRS port.

In some embodiments, in response to a number of CWs being 1, the port association rule includes that:
the first uplink DMRS port is an uplink DMRS port corresponding to the maximum port number among the uplink DMRS ports allocated in the first DMRS port group, and the second uplink DMRS port is an uplink DMRS port corresponding to the maximum port number among the uplink DMRS ports allocated in the second DMRS port group; or
the first uplink DMRS port is an uplink DMRS port corresponding to the minimum port number among the uplink DMRS ports allocated in the first DMRS port group, and the second uplink DMRS port is an uplink DMRS port corresponding to the minimum port number among the uplink DMRS ports allocated in the second DMRS port group; or
the first uplink DMRS port is an uplink DMRS port corresponding to the maximum port number among the uplink DMRS ports allocated in the first DMRS port group, and the second uplink DMRS port is an uplink DMRS port corresponding to the minimum port number among the uplink DMRS ports allocated in the second DMRS port group; or
the first uplink DMRS port is an uplink DMRS port corresponding to the minimum port number among the uplink DMRS ports allocated in the first DMRS port group, and the second uplink DMRS port is an uplink DMRS port corresponding to the maximum port number among the uplink DMRS ports allocated in the second DMRS port group.

In some embodiments, in response to a number of CWs being 2, the two DMRS port groups correspond one-to-one to the two CWs, and the port association rule includes that:
the first uplink DMRS port is an uplink DMRS port corresponding to the maximum port number among the uplink DMRS ports allocated in the DMRS port group corresponding to a first CW; or
the first uplink DMRS port is an uplink DMRS port corresponding to the minimum port number among the uplink DMRS ports allocated in the DMRS port group corresponding to a first CW.

In some embodiments, in response to a number of CWs being 2, the two DMRS port groups correspond one-to-one to the two CWs, and the port association rule includes that:
the second uplink DMRS port is an uplink DMRS port corresponding to the maximum port number among the uplink DMRS ports allocated in the DMRS port group corresponding to a second CW; or
the second uplink DMRS port is an uplink DMRS port corresponding to the minimum port number among the uplink DMRS ports allocated in the DMRS port group corresponding to a second CW.

In some embodiments, the port association rule includes that:
the first uplink DMRS port is any uplink DMRS port among the uplink DMRS ports allocated in the first DMRS port group other than an uplink DMRS port corresponding to the minimum port number; and
the second uplink DMRS port is any uplink DMRS port among the uplink DMRS ports allocated in the second DMRS port group other than an uplink DMRS port corresponding to the minimum port number.

In some embodiments, the allocated uplink DMRS ports corresponding to the PUSCH are divided into two DMRS port groups, and the two DMRS port groups include a first DMRS port group and a second DMRS port group.

The processing module 710 is configured to: in response to a number of the uplink PTRS ports being 2, dynamically determine, according to the port association rule, a first uplink DMRS port associated with a first uplink PTRS port from the uplink DMRS ports allocated in the first DMRS port group, where the first uplink PTRS port is one uplink PTRS port among the two uplink PTRS ports; and
dynamically determine, according to the port association rule, a second uplink DMRS port associated with a second uplink PTRS port among the uplink DMRS ports allocated in the second DMRS port group, where the second uplink PTRS port is another uplink PTRS port among the two uplink PTRS ports other than the first uplink PTRS port.

In some embodiments, the port association rule includes that:
in a case of using a schedule-free PUSCH transmission, selecting cyclically, corresponding to the PTRS transmitted on each transmission occasion on the PUSCH, starting from a predefined port number, and in the order of port numbers of the uplink DMRS port, one uplink DMRS port among the uplink DMRS ports allocated in the first DMRS port group as the first uplink DMRS port; or
in a case of using a schedule-free PUSCH transmission, selecting cyclically, corresponding to the PTRS transmitted on each transmission occasion on the PUSCH, starting from a predefined port number, and in the order of port numbers of the uplink DMRS port, one uplink DMRS port among the uplink DMRS ports allocated in the second DMRS port group as the second uplink DMRS port.

In some embodiments, the uplink DMRS ports in each DMRS port group are configured by the network device via a high-layer signaling, or the uplink DMRS ports in each DMRS port group are predefined.

In some embodiments, the processing module 710 is configured to: in response to a TRI being greater than 1, determine, according to the port association rule, the default association relationship between the uplink PTRS port and the uplink DMRS port.

In some embodiments, the processing module 710 is configured to:
in response to a configuration on a designated information field of DCI being null, determine, according to the port association rule, the default association relationship between the uplink PTRS port and the uplink DMRS port; or
in response to sending the PTRS on a schedule-free PUSCH Type-1, determine, according to the port association rule, the default association relationship between the uplink PTRS port and the uplink DMRS port.

In some embodiments, the designated information domain is a PTRS-DMRS association domain.

FIG. 8 is a schematic diagram of a UE according to an exemplary embodiment. The UE includes: a processor 1201, a receiver 1202, a transmitter 1203, a memory 1204 and a bus 1205.

The processor 1201 includes one or more processing cores. The processor 1201 executes various functional applications and information processing by running software programs and modules.

The receiver 1202 and the transmitter 1203 can be implemented as one communication component, which can be a communication chip.

The memory 1204 is connected to the processor 1201 through the bus 1205.

The memory 1204 may be configured to store at least one instruction, and the processor 1201 is configured to execute the at least one instruction to implement each step in the above method embodiments.

The memory 1204 may be implemented by any type of volatile or non-volatile storage device or combinations thereof. The volatile or non-volatile storage device includes, but is not limited to, a magnetic or optical disk, an electrically erasable programmable read-only memory (EEPROM), an erasable programmable read only memory (EPROM), a static random-access memory (SRAM), a read only memory (ROM), a magnetic memory, a flash memory, a programmable ROM (PROM).

In an exemplary embodiment, a non-transitory computer-readable storage medium including instructions is provided according to the embodiments of disclosure, such as a memory including instructions. The above instructions can be executed by a processor of the UE to complete the above method for determining the association relationship of the uplink PTRS port. For example, the non-transitory computer-readable storage medium may be a ROM, a random access memory (RAM), a compact disc read-only memory (CD-ROM), a magnetic tape, a floppy disk and an optical data storage device, etc.

A non-transitory computer-readable storage medium including instructions is provided according to the embodiments of disclosure. When the instructions in the non-transitory computer storage medium are executed by a processor of the UE, the UE is able to perform the method for determining the association relationship of the uplink PTRS port.

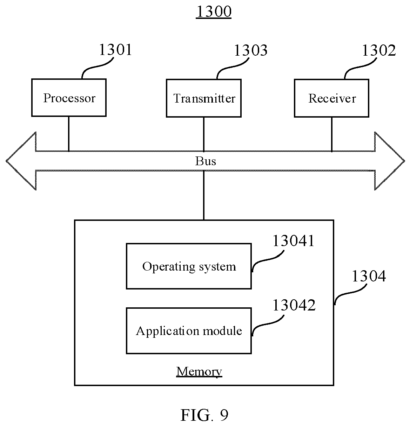

FIG. 9 is a schematic diagram of a network device 1300 according to an exemplary embodiment. The network device 1300 may be a base station.

The network device 1300 may include: a processor 1301, a receiver 1302, a transmitter 1303, and a memory 1304. The receiver 1302, the transmitter 1303 and the memory 1304 are respectively connected to the processor 1301 through a bus.

The processor 1301 includes one or more processing cores. The processor 1301 executes the method for determining an uplink PTRS port association relationship in the embodiments of the disclosure by running software programs and modules. The memory 1304 may be used to store software programs and modules. In detail, the memory 1304 can store an operating system 13041 and an application module 13042 required by at least one function. The receiver 1302 is used to receive communication data sent by other devices, and the transmitter 1303 is used to send communication data to other devices.

An exemplary embodiment of the disclosure also provides a computer-readable storage medium. The computer-readable storage medium stores at least one instruction, at least one program segment, code set or instruction set. The at least one instruction, the at least one program segment, code set or instruction set are loaded and executed by a processor to implement the method for determining the association relationship of the uplink PTRS port according to any of the above method embodiments.

An exemplary embodiment of the disclosure also provides a computer program product including computer instructions. The computer instructions are stored in a computer-readable storage medium and may be read from the computer-readable storage medium by a processor of a computer. The processor executes the computer instructions to enable the computer to perform the method for determining the association relationship of the uplink PTRS port according to any of the above method embodiments.

It should be understood that the term "a plurality of" mentioned in this article means two or more. The term "and/or" describes the relationship between related objects, and is used to indicate three relations. For example, A and/or B means that A exists alone, A and B both exist, and B exists alone. The character "/" generally indicates that the related objects before the character "/" are in an "or" relation.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A method for determining an association relationship of an uplink phase tracking reference signal (PTRS) port, comprising:
determining, according to a port association rule, a default association relationship between an uplink PTRS port and an uplink demodulation reference signal (DMRS) port, wherein the default association relationship indicates a transmission of a PTRS;
wherein a maximum number of uplink DMRS ports allocated to a terminal is 8.

2. The method of claim 1, wherein determining, according to the port association rule, the default association relationship between the uplink PTRS port and the uplink DMRS port comprises:
in response to a number of the uplink PTRS ports being 1, associating fixedly, according to the port association rule, the uplink PTRS port with a first uplink DMRS port among uplink DMRS ports correspondingly allocated for a physical uplink shared channel (PUSCH).

3. The method of claim 2, wherein the port association rule comprises that:
in response to a number of transmitted code words (CWs) being 1, the first uplink DMRS port is an uplink DMRS port corresponding to a maximum port number among the uplink DMRS ports correspondingly allocated for the PUSCH; or
in response to a number of CWs being 1, the first uplink DMRS port is an uplink DMRS port corresponding to a minimum port number among the uplink DMRS ports correspondingly allocated for the PUSCH.

4. The method of claim 2, wherein in response to a number of code words (CWs) being 2, the uplink DMRS ports correspondingly allocated for the PUSCH are divided into two DMRS port groups, the two DMRS port groups have a one-to-one correspondence with the two CWs, and the port association rule comprises that:
the first uplink DMRS port is an uplink DMRS port corresponding to a maximum port number among the uplink DMRS ports allocated in the DMRS port group corresponding to the CW with a higher modulation and coding scheme (MCS) level; or
the first uplink DMRS port is an uplink DMRS port corresponding to a minimum port number among the uplink DMRS ports allocated in the DMRS port group corresponding to the CW with a higher MCS level; or
the first uplink DMRS port is an uplink DMRS port corresponding to a maximum port number among the uplink DMRS ports allocated in the DMRS port group corresponding to a first CW in the two CWs with an equal MCS level; or
the first uplink DMRS port is an uplink DMRS port corresponding to a minimum port number among the uplink DMRS ports allocated in the DMRS port group corresponding to a first CW in the two CWs with an equal MCS level; or
the first uplink DMRS port is an uplink DMRS port corresponding to a maximum port number among the uplink DMRS ports allocated in the DMRS port group corresponding to a second CW in the two CWs with an equal MCS level; or
the first uplink DMRS port is an uplink DMRS port corresponding to a minimum port number among the uplink DMRS ports allocated in the DMRS port group corresponding to a second CW in the two CWs with an equal MCS level.

5. The method of claim 2, wherein the port association rule comprises that:
in response to a number of code words (CWs) being 2, the first uplink DMRS port is an uplink DMRS port corresponding to a maximum port number among the uplink DMRS ports correspondingly allocated for the PUSCH; or
in response to a number of CWs being 2, the first uplink DMRS port is an uplink DMRS port corresponding to a minimum port number among the uplink DMRS ports correspondingly allocated for the PUSCH.

6. The method of claim 2, wherein the port association rule comprises that:
the first uplink DMRS port is any uplink DMRS port among the uplink DMRS ports correspondingly allocated for the PUSCH other than an uplink DMRS port corresponding to a minimum port number.

7. The method of claim 1, wherein determining, according to the port association rule, the default association relationship between the uplink PTRS port and the uplink DMRS port comprises:
in response to a number of the uplink PTRS ports being 1, determining dynamically, according to the port association rule, a first uplink DMRS port associated with the uplink PTRS port from uplink DMRS ports correspondingly allocated for a physical uplink shared channel (PUSCH).

8. The method of claim 7, wherein the port association rule comprises that:
in a case of using a schedule-free PUSCH transmission, for a PTRS transmission on each transmission occasion on the PUSCH, starting from a predefined port number, and in an order of port numbers of the uplink DMRS ports, determining cyclically one uplink DMRS port among the uplink DMRS ports correspondingly allocated for the PUSCH as the first uplink DMRS port.

9. The method of claim 1, wherein uplink DMRS ports correspondingly allocated for a physical uplink shared channel (PUSCH) are divided into two DMRS port groups, and the two DMRS port groups comprise a first DMRS port group and a second DMRS port group; and
determining, according to the port association rule, the default association relationship between the uplink PTRS port and the uplink DMRS port comprises:
in response to a number of uplink PTRS ports being 2, associating fixedly, according to the port association rule, a first uplink PTRS port with a first uplink DMRS port in the first DMRS port group, wherein the first uplink PTRS port is one uplink PTRS port among the two uplink PTRS ports; and
associating fixedly, according to the port association rule, a second uplink PTRS port with a second uplink DMRS port in the second DMRS port group, wherein the second uplink PTRS port is another uplink PTRS port among the two uplink PTRS ports other than the first uplink PTRS port.

10. The method of claim 9, wherein in response to a number of code words (CWs) being 1, the port association rule comprises that:
the first uplink DMRS port is an uplink DMRS port corresponding to a maximum port number among the uplink DMRS ports allocated in the first DMRS port group, and the second uplink DMRS port is an uplink DMRS port corresponding to a maximum port number among the uplink DMRS ports allocated in the second DMRS port group; or
the first uplink DMRS port is an uplink DMRS port corresponding to a minimum port number among the uplink DMRS ports allocated in the first DMRS port group, and the second uplink DMRS port is an uplink DMRS port corresponding to a minimum port number among the uplink DMRS ports allocated in the second DMRS port group; or
the first uplink DMRS port is an uplink DMRS port corresponding to a maximum port number among the uplink DMRS ports allocated in the first DMRS port group, and the second uplink DMRS port is an uplink DMRS port corresponding to a minimum port number among the uplink DMRS ports allocated in the second DMRS port group; or
the first uplink DMRS port is an uplink DMRS port corresponding to a minimum port number among the uplink DMRS ports allocated in the first DMRS port group, and the second uplink DMRS port is an uplink DMRS port corresponding to the maximum port number among the uplink DMRS ports allocated in the second DMRS port group.

11. The method of claim 9, wherein in response to a number of code words (CWs) being 2, the two DMRS port groups have a one-to-one correspondence with the two CWs, and the port association rule comprises that:
the first uplink DMRS port is an uplink DMRS port corresponding to a maximum port number among the uplink DMRS ports allocated in the DMRS port group corresponding to a first CW; or
the first uplink DMRS port is an uplink DMRS port corresponding to a minimum port number among the uplink DMRS ports allocated in the DMRS port group corresponding to a first CW.

12. The method of claim 9, wherein in response to a number of code words (CWs) being 2, the two DMRS port groups have a one-to-one correspondence with the two CWs, and the port association rule comprises that:
the second uplink DMRS port is an uplink DMRS port corresponding to a maximum port number among the uplink DMRS ports allocated in the DMRS port group corresponding to a second CW; or
the second uplink DMRS port is an uplink DMRS port corresponding to a minimum port number among the uplink DMRS ports allocated in the DMRS port group corresponding to a second CW.

13. The method of claim 9, wherein the port association rule comprises that:
the first uplink DMRS port is any uplink DMRS port among the uplink DMRS ports allocated in the first DMRS port group other than an uplink DMRS port corresponding to a minimum port number; and
the second uplink DMRS port is any uplink DMRS port among the uplink DMRS ports allocated in the second DMRS port group other than an uplink DMRS port corresponding to a minimum port number.

14. The method of claim 1, wherein uplink DMRS ports correspondingly allocated for a physical uplink shared channel (PUSCH) are divided into two DMRS port groups, and the two DMRS port groups comprise a first DMRS port group and a second DMRS port group; and
determining, according to the port association rule, the default association relationship between the uplink PTRS port and the uplink DMRS port comprises:
in response to a number of the uplink PTRS ports being 2, determining dynamically, according to the port association rule, a first uplink DMRS port associated with a first uplink PTRS port from the uplink DMRS ports allocated in the first DMRS port group, wherein the first uplink PTRS port is one uplink PTRS port among the two uplink PTRS ports; and
determining dynamically, according to the port association rule, a second uplink DMRS port associated with a second uplink PTRS port from the uplink DMRS ports allocated in the second DMRS port group, wherein the second uplink PTRS port is another uplink PTRS port among the two uplink PTRS ports other than the first uplink PTRS port.

15. The method of claim 14, wherein the port association rule comprises that:
in a case of using a schedule-free PUSCH transmission, for a PTRS transmission on each transmission occasion on the PUSCH, starting from a predefined port number, and in an order of port numbers of the uplink DMRS ports, determining cyclically one uplink DMRS port among the uplink DMRS ports allocated in the first DMRS port group as the first uplink DMRS port; or
in a case of using a schedule-free PUSCH transmission, for a PTRS transmission on each transmission occasion on the PUSCH, starting from a predefined port number, and in an order of port numbers of the uplink DMRS ports, determining cyclically one uplink DMRS port among the uplink DMRS ports allocated in the second DMRS port group as the second uplink DMRS port.

16. The method of any one of claims 1-15, wherein determining, according to the port association rule, the default association relationship between the uplink PTRS port and the uplink DMRS port comprises:
in response to a transmit rank indicator (TRI) being greater than 1, determining, according to the port association rule, the default association relationship between the uplink PTRS port and the uplink DMRS port.

17. The method of any one of claims 1-15, wherein determining, according to the port association rule, the default association relationship between the uplink PTRS port and the uplink DMRS port comprises:
in response to a configuration on a designated information field of downlink control information (DCI) being null, determining, according to the port association rule, the default association relationship between the uplink PTRS port and the uplink DMRS port; or
in response to sending the PTRS on a schedule-free configured grant physical uplink shared channel (CG-PUSCH) Type-1, determining, according to the port association rule, the default association relationship between the uplink PTRS port and the uplink DMRS port.

18. The method of claim 17, wherein the designated information field is a PTRS-DMRS association field.

19. An apparatus for determining an association relationship of an uplink phase tracking reference signal (PTRS) port, comprising:
a processing module configured to determine, according to a port association rule, a default association relationship between an uplink PTRS port and an uplink demodulation reference signal (DMRS) port, wherein the default association relationship indicates a transmission of a PTRS;
wherein a maximum number of uplink DMRS ports allocated to a terminal is 8.

20. A terminal, comprising:
a processor; and
a transceiver connected to the processor;
wherein the processor is configured to load and execute executable instructions to implement the method for determining the association relationship of the uplink PTRS port according to any one of claims 1-18.

21. A computer-readable storage medium having at least one instruction, at least one program, code set or instruction set stored thereon, wherein the at least one instruction, the at least one program, code set or instruction set are loaded and executed by a processor to implement the method for determining the association relationship of the uplink PTRS port according to any one of claims 1-18.

22. A computer program product comprising computer instructions, wherein the computer instructions are stored in a computer-readable storage medium and are read from the computer-readable storage medium by a processor of a computer device, and the processor executes the computer instructions to cause the computer device to implement the method for determining the association relationship of the uplink PTRS port according to any one of claims 1-18.
